# EUROPÄISCHE PATENTSCHRIFT

(11) **EP 0 544 734 B1**
(45) Veröffentlichungstag und Bekanntmachung des Hinweises auf die Patenterteilung: **20.04.1994**
(21) Anmeldenummer: 91914811.4
(22) Anmeldetag: 21.08.1991
(51) Int. Cl.: B62D 5/24, B62D 5/06

(54) **HYDRAULISCHE HILFSKRAFTLENKUNG**
HYDRAULIC POWER-ASSISTED STEERING SYSTEM
DIRECTION ASSISTEE

(30) Priorität: 24.08.1990 DE 4026746
(43) Veröffentlichungstag der Anmeldung: 09.06.1993
(73) Patentinhaber: ZAHNRADFABRIK FRIEDRICHSHAFEN AG, 88015 Friedrichshafen (DE)
(72) Erfinder: ELSER, Dieter, D-7087 Essingen (DE)
(86) Internationale Anmeldenummer: EP9101588
(87) Internationale Veröffentlichungsnummer: WO9203326

(56) Entgegenhaltungen:
- EP-A- 0 321 756
- WO-A-89/07064
- FR-A- 2 260 484

## Beschreibung

Die Erfindung betrifft eine hydraulische Hilfskraftlenkung, insbesondere für Kraftfahrzeuge, mit einem in einem Gehäuse auf einer Gewindespindel verschiebbaren Arbeitskolben und einem Lenkventil, das in Abhängigkeit von der Lenkrichtung Drucköl in eine der Arbeitskammern des Arbeitskolbens einsteuert. Der Arbeitskolben weist eine Axialbohrung auf, in der beidseitig im Bohrungsaustritt Abschaltventile sitzen, deren Stößel aus dem Arbeitskolben hervorstehen. Zum Abschalten der Hilfskraft in den beiden Lenkausschlagstellungen laufen die Stößel gegen in radiale Wände des Gehäuses eingesetzte Anschläge. Diese Anschläge lassen sich bei der Erstmontage durch den Arbeitskolben selbsttätig in die exakte Betätigungsstellung eindrücken, in der die Räder die Endanschläge erreichen.

Eine derartige Lenkeinrichtung ist aus der PCT-Veröffentlichung WO 89/07064 bekannt. Dort sitzen die als Büchsen ausgeführten Anschläge in Bohrungen der radialen Gehäusewände, d. h., die Anschläge lassen sich nur nach Demontage der Lenkung ausbauen. Da die Anschläge nach der Lenkungsmontage beim erstmaligen Lenken über den gesamten Lenkeinschlag auf ein auf die Radanschläge abgestimmtes Einpreßmaß gedrückt werden, läßt sich die Lenkung nicht mehr über den gesamten Hubbereich des Arbeitszylinders prüfen, ohne dabei die Lenkbegrenzungseinstellung zu verändern. Das heißt, die zum Einstellen verschieblichen Anschläge muß man nach einer Prüfung über den gesamten Kolbenhub durch die zugehörigen Gehäusebohrungen, also von außen, in die Ausgangsstellung zurückpressen, um sie anschließend durch Anlenken gegen die Radanschläge erneut einzustellen. Eine Neueinstellung der Lenkbegrenzung kann unter Umständen auch beim Kunden erforderlich werden, wenn eine Fehleinstellung durch den Fahrzeughersteller erfolgte.

Der Erfindung liegt die Aufgabe zugrunde, die Lenkbegrenzung so zu verbessern, daß auch nachträgliche Einstellungsänderungen ohne großen Montageaufwand möglich sind.

Nach der Erfindung läßt sich diese Aufgabe durch die Merkmale des Anspruchs 1 lösen. Eine weitere Lösung dieser Aufgabe enthält der nebengeordnete Anspruch 2. Die Ansprüche 3 und 4 geben vorteilhafte Weiterbildungen der Erfindung an.

Nach Anspruch 1 sitzen die als Büchsen ausgeführten Anschläge auf in die Gehäusewände einschraubbaren Bolzen. Die aus Bolzen und Büchse bestehende Kombination läßt sich außerhalb des Gehäuses leicht vormontieren. Dabei kann die erlaubte Verschiebekraft zwischen einem Mindest- und einem Höchstwert viel leichter überwacht werden. Nach dem Stand der Technik ist die Überwachung der Verschiebekräfte in unterschiedlich große Gehäuseteile viel schwieriger.

Mit der verbesserten Lenkbegrenzung lassen sich die Gewindelöcher im Gehäuse und im Deckel des Arbeitszylinders zunächst mit normalen Schrauben verschließen, so daß der gesamte Hubbereich des Arbeitskolbens geprüft werden kann. Nach Ende des Prüfvorganges schraubt man die Bolzen mit der verschieblichen Büchse ein, prüft die Dichtheit der Anordnung und stellt anschließend durch Anlenken des Arbeitskolbens die vorgegebenen Abschaltpunkte ein. Sollte der Fahrzeugkunde eine fehlerhafte Einstellung der Lenkbegrenzung feststellen, so läßt sich die aus Bolzen und Büchse bestehende Kombination von außen leicht austauschen oder die Büchse auf dem Bolzen außerhalb der Lenkung neu einstellen. Man kann somit eine Lenkungsdemontage vermeiden. Die aufeinander steckbaren Bauteile haben ein geringes Gewicht und lassen sich daher leicht handhaben.

Nach Anspruch 2 kann man die Bolzen auch als einschraubbare Büchsen ausführen und die Anschläge als kleine Kolben in die Büchsen einpressen. Mit dieser Variante lassen sich dieselben Einstell- und Montagevorteile erzielen wie mit der Ausführung nach Anspruch 1.

Versieht man nach Anspruch 3 den Sitz der Anschläge (Büchsen bzw. kleine Kolben) mit Ringwülsten, so erzielt man damit eine Verbesserung der Haftreibung.

Nach Anspruch 4 weisen die kleinen Kolben der Variante Entlastungsbohrungen auf, so daß auf beiden Kolbenseiten Druckgleichheit herrscht. Damit können keine hydraulischen Verstellkräfte auf die Kolben einwirken.

Die Beschreibung erläutert zwei Ausführungsbeispiele der Erfindung anhand der Zeichnung. Es zeigen
- Fig. 1: eine Hilfskraftlenkung im Schnitt in vereinfachter Darstellung und
- Fig. 2: einen vergrößerten Ausschnitt der Einzelheit II in Fig. 1;
- Fig. 3: eine Ausführungsform, dargestellt im vergrößerten Ausschnitt.

Die Hilfskraftlenkung besteht aus einem als Zylinder ausgeführten Lenkgehäuse 1, in welchem sich ein Arbeitskolben 2 verschiebt. Der Arbeitskolben 2 greift mit einer Verzahnung 3 in eine Segmentwelle 4 ein. Außerdem steht der gleichzeitig als Lenkmutter dienende Arbeitskolben 2 über eine Kugelkette 5 mit einer Lenkschnecke 6 in Eingriff. Die Lenkschnecke 6 steht mit einer Lenkspindel 7 in Verbindung. Zu beiden Seiten des Arbeitskolbens 2 befinden sich Druckräume 10 und 11. Eine Hochdruckpumpe 12 fördert Drucköl aus einem Behälter 13 über eine Druckleitung 14 zu einem durch die Drehbewegung der Lenkspindel unsteuerbaren Lenkventil (nicht dargestellt). In der Neutralstellung des Lenkventils strömt das Drucköl über eine Rücklaufleitung 15 zum Behälter 13 ab. Zwischen der Druckleitung 14 und der Rücklaufleitung 15 sitzt ein Druckbegrenzungsventil 16.

Der Arbeitskolben 2 enthält in einer achsparallelen Durchgangsbohrung 17 zwei Abschaltkolben 20 und 21. Eine verhältnismäßig schwache Feder 18 drückt die Abschaltkolben 20 und 21 in ihrer Grundstellung gegen Sitze 22 und 23. Jeder Kolben 20 und 21 hat einen Stößel 24 und 25.

Nach der Erfindung schraubt man in Bohrungen 26 und 27 der radial zur Lenkspindel verlaufenden Wände 30 und 31 Bolzen 40 und 41 ein, auf welchen als Anschläge wirkende Büchsen 32 und 33 aufgepreßt sind. Der Stößel 24 bzw. 25 steht um das Maß "x" aus dem Arbeitskolben 2 hervor. Das Maß "x" entspricht einem Schwenkwinkel der Segmentwelle 4 von ca. 2 Grad, d. h., der Arbeitsdruck baut sich beim Anstoßen, beispielsweise des Stößels 24 an der Büchse 32, etwa 2 Grad vor Erreichen des zugehörigen Radanschlags ab. Durch kleine Bohrungen 34 entlastet man die Büchsen 32 und 33 vom Arbeitsdruck.

Die Haftung zwischen den Büchsen 32, 33 und den Bolzen 40 und 41 kann man dadurch verbessern, indem man einen Sitz (z. B. an den Bolzen) mit Ringwülsten 36 versieht. Durch diese Ringwülste läßt sich bei gleichen Einpreßkräften das radiale Übermaß vergrößern. Die Durchmessertoleranzen können somit bei gleich guter axialer Befestigungssicherheit größer sein.

Die Einstellung der Abschalteinrichtung nimmt man wie folgt vor:
Nach der Lenkungsmontage drückt man zunächst die Büchsen 32 und 33 nur wenig auf die Bolzen 40 und 41 auf. Anschließend wird die Kombination Bolzen/Büchse in die Bohrung 26 bzw. 27 eingeschraubt. Zum Einstellen lenkt man einmal gegen die den Lenkausschlag begrenzenden Radanschläge, wobei der Arbeitskolben 2 die Büchsen 32 und 33 weiter auf den Bolzen 40 bzw. 41 aufschiebt. Dabei stellt sich das Einpreßmaß "a" selbsttätig ein. Da die Stößel 24 und 25 um das Maß "x" aus dem Arbeitskolben 2 hervorstehen, wird im Lenkbetrieb die hydraulische Kraft innerhalb dieses Maßes "x" vor Erreichen der Radanschläge abgeschaltet. Dies bedeutet, daß z. B. bei nach links bewegtem Arbeitskolben 2 der durch den Stößel 24 aufgestoßene Abschaltkolben 20 den unter Arbeitsdruck stehenden Druckraum 11 über den bereits bei einem niedrigen Druck öffnenden Abschaltkolben 21 und die Durchgangsbohrung 17 mit dem entlasteten Druckraum 10 verbindet.

Für die die Büchsen 32 und 33 tragenden Bolzen 40 und 41 sieht man im Einschraubbereich des Gehäuses 1 dasselbe Gewinde vor, wie bei von Hand einstellbaren Schrauben in Lenkbegrenzungen, z. B. nach der DE-OS 29 30 498. Dadurch läßt sich das Anfertigen neuer Teile für die automatisch einstellbare Lenkbegrenzung vermeiden.

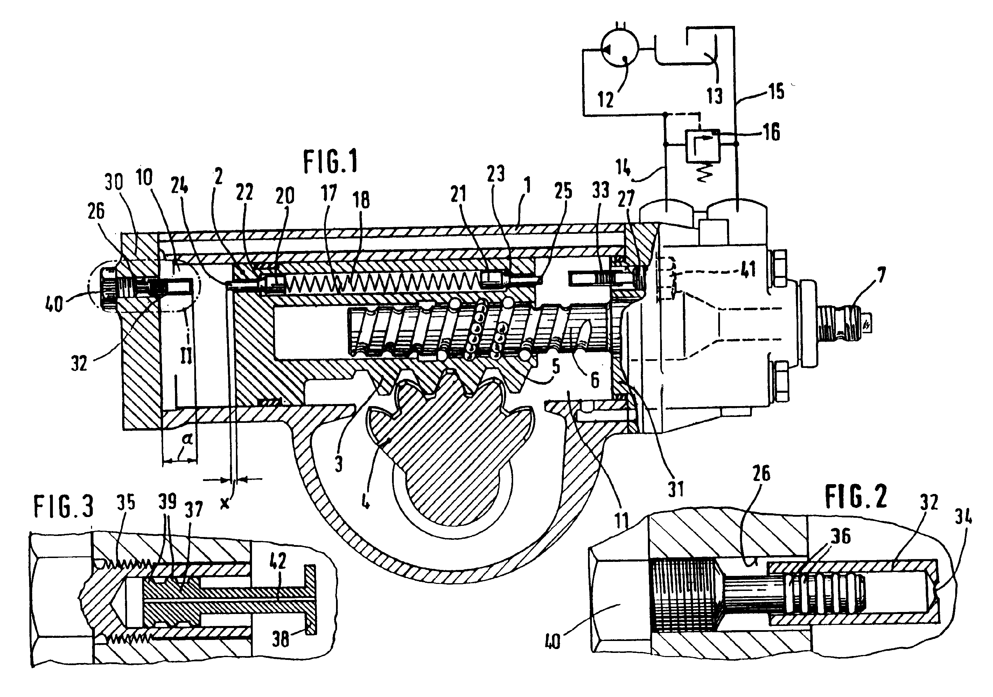

Die Variante nach Fig. 3 weist einschraubbare Büchsen 35 auf, in die als Anschläge kleine Kolben 37 eingesetzt sind. Die Kolben 37 tragen Stoßflächen 38, an welchen z. B. der Stößel 24 (Fig. 1) in den Lenkanschlagstellungen in Anlage kommt . Die Kolben 37 lassen sich, wie in Verbindung mit Fig. 2 beschrieben, mit Ringwülsten 39 versehen. Durch die Kolben 37 führt man Entlastungsbohrungen 42.

### Bezugszeichen

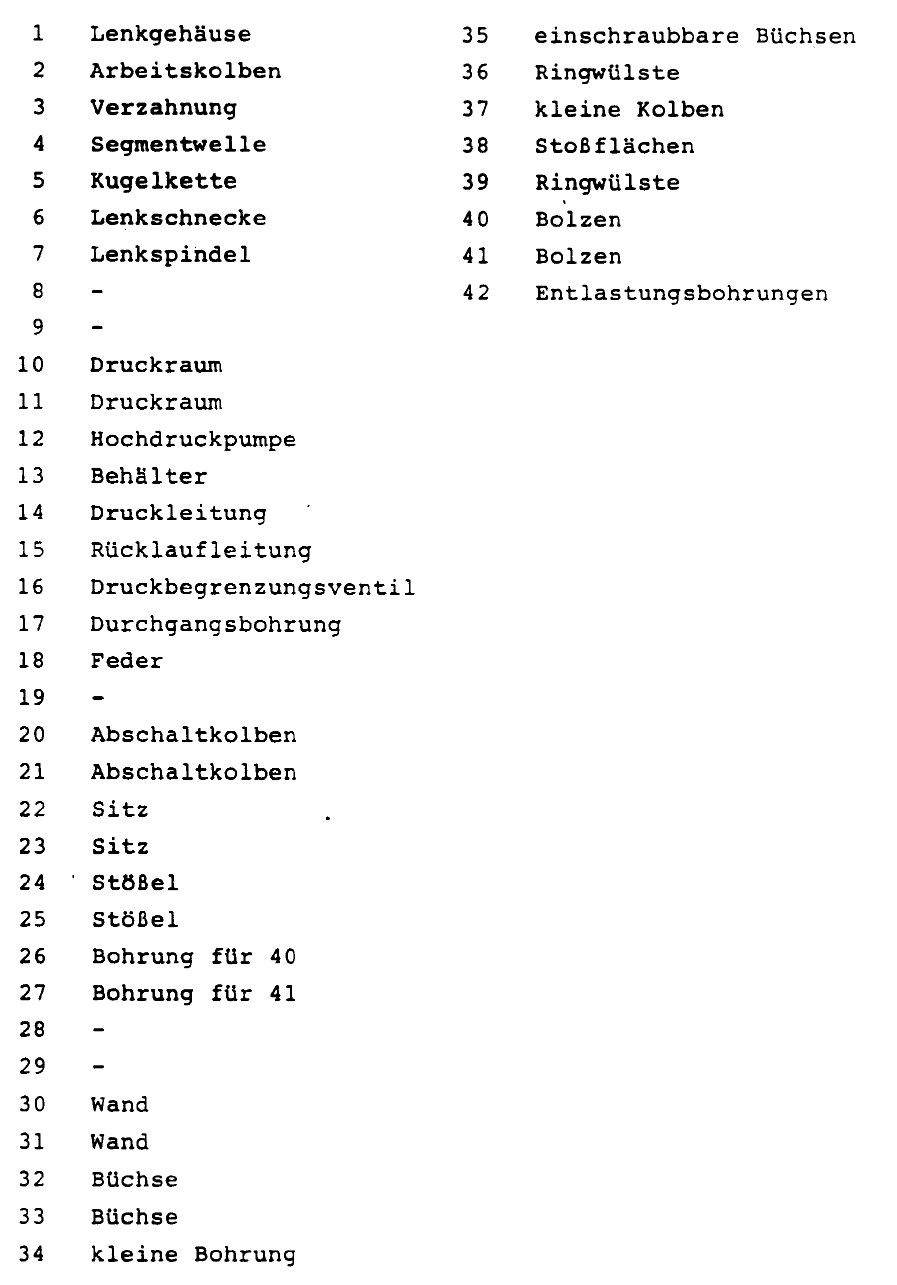

## Patentansprüche

1. Hydraulische Hilfskraftlenkung, insbesondere für Kraftfahrzeuge mit folgenden Merkmalen:
- in einem Gehäuse (1) ist ein auf einer Lenkschnecke (6) verschiebbarer Arbeitskolben (2) gelagert;
- es ist ein Lenkventil vorhanden, welches Drucköl in Arbeitskammern (10 und 11) des Arbeitskolbens (2) einsteuert;
- in einer Axialbohrung (17) des Arbeitskolbens (2) sitzen beidseitig Abschaltventile (20, 22, 24; 21, 23, 25) mit aus dem Arbeitskolben (2) hervorstehenden Stößeln (24, 25) zum Abschalten der Hilfskraft in den beiden Lenkausschlag-Stellungen;
- die Betätigung der Abschaltventile (20, 22, 24; 21, 23, 25) erfolgt beim Anstoßen der Stößel an in radiale Wände des Gehäuses einsetzbare Anschläge;
- die Anschläge lassen sich bei der Erstmontage durch den Arbeitskolben (2) selbsttätig in die für das Abschalten der Hilfskraft bestimmende Stellung eindrücken,
dadurch **gekennzeichnet**, daß die Anschläge als Büchsen (32, 33) ausgeführt sind, und die Büchsen auf in die Gehäusewände (30 und 31) einschraubbare Bolzen (40 und 41) sitzen.

2. Hydraulische Hilfskraftlenkung, insbesondere für Kraftfahrzeuge mit folgenden Merkmalen:
- in einem Gehäuse (1) ist ein auf einer Lenkschnecke (6) verschiebbarer Arbeitskolben (2) gelagert;
- es ist ein Lenkventil vorhanden, welches Drucköl in Arbeitskammern (10 und 11) des Arbeitskolbens (2) einsteuert;
- in einer Axialbohrung (17) des Arbeitskolbens (2) sitzen beidseitig Abschaltventile (20, 22, 24; 21, 23, 25) mit aus dem Arbeitskolben (2) hervorstehenden Stößeln (24, 25) zum Abschalten der Hilfskraft in den beiden Lenkausschlag-Stellungen;
- die Betätigung der Abschaltventile (20, 22, 24; 21, 23, 25) erfolgt beim Anstoßen der Stößel an in radiale Wände des Gehäuses einsetzbare Anschläge;
- die Anschläge lassen sich bei der Erstmontage durch den Arbeitskolben (2) selbsttätig in die für das Abschalten der Hilfskraft bestimmende Stellung eindrücken,
dadurch **gekennzeichnet**, daß die Anschläge als kleine Kolben (37) mit Stoßflächen (38) ausgeführt sind und die Kolben in einschraubbaren Büchsen (35) sitzen.

3. Hydraulische Hilfskraftlenkung nach Anspruch 1 bzw. 2, dadurch **gekennzeichnet,** daß der Sitz der Anschläge (Büchsen 32, 33; kleine Kolben 37) zur Verbesserung der Haftreibung Ringwülste (36 bzw. 37) aufweist.

4. Hydraulische Hilfskraftlenkung nach Anspruch 2 dadurch **gekennzeichnet,** daß die kleinen Kolben (37) Entlastungsbohrungen (42) aufweisen.

## Claims

1. The present invention concerns a hydraulic power-assisted steering system, in particular for motor vehicles, with the following characteristics:
- a working piston (2) is movably mounted on a steering worm (6) installed within a housing (1);
- a steering valve is provided which directs pressurized oil into the working chambers (10 and 11) of the working piston (2);
- cut-off valves (20, 22, 24; 21, 23, 25) are located on either side of an axial bore (17) in the working piston (2) and incorporate rams (24, 25) protruding from the working piston (2) which are used for switching off the servo-assistance in both full-lock steering positions;
- the cut-off valves (20, 22, 24; 21, 23, 25) are actuated by the rams coming into contact with stops which may be inserted in radial walls in the housing;
- following initial assembly, the working piston (2) pushes the stops automatically into the position from which they determine when the servo-assistance will be switched off,
**characterized** in that,
the stops take the form of bushings (32, 33) and that the bushings are located on bolts (40 and 41) which may be screwed into the housing walls (30 and 31).

2. Hydraulic power-assisted steering system, in particular for motor vehicles, with the following characteristics:
- a working piston (2) is movably mounted on a steering worm (6) installed within a housing (1);
- a steering valve is provided which directs pressurized oil into the working chambers (10 and 11) of the working piston (2);
- cut-off valves (20, 22, 24; 21, 23, 25) are located on either side of an axial bore (17) in the working piston (2) and incorporate rams (24, 25) protruding from the working piston (2) which are used for switching off the servo-assistance in both full-lock steering positions;
- the cut-off valves (20, 22, 24; 21, 23, 25) are actuated by the rams coming into contact with stops which may be inserted in radial walls in the housing;
- following initial assembly, the working piston (2) pushes the stops automatically into the position from which they determine when the servo-assistance will be switched off,
**characterized** in that,
the stops take the form of small pistons (37) with tappet surfaces (38), and that the pistons are located in bushings (35) which may be screwed in.

3. Hydraulic power-assisted steering system in accordance with Claim 1 or Claim 2, **characterized** in that the seat of the stops (bushings 32, 33; small pistons 37) demonstrates annular ridges (36 or 37) in order to improve static friction.

4. Hydraulic power-assisted steering system in accordance with Claim 2, **characterized** in that the small pistons (37) demonstrate relief bores (42).

## Revendications

1. Mécanisme de direction à assistance hydraulique, en particulier pour véhicules automobiles, présentant les caractéristiques suivantes:
- un piston de travail (2) déplaçable sur une vis sans fin de direction (6) est logé dans un carter (1);
- il existe une soupape de braquage qui injecte de l'huile sous pression dans les chambres de travail (10 et 11) du piston de travail (2);
- dans un perçage axial (17) du piston de travail (2) sont placés, des deux côtés, des valves de coupure (20, 22, 24; 21, 23, 25) avec des poussoirs (24, 25) dépassant du piston de travail (2) pour couper la force auxiliaire dans les deux positions finales de braquage;
- l'actionnement des valves de coupure (20, 22, 24; 21, 23, 25) se fait en amenant les poussoirs en contact avec des butées pouvant être insérées dans les parois radiales du carter;
- lors du premier montage, les butées sont automatiquement enfoncées par le piston de travail (2) dans la position déterminante pour la coupure de la force auxiliaire,
**caractérisé** en ce que
les butées sont conçues en tant que douilles (32, 33) et que ces douilles sont placées sur des axes (40 et 41) vissables dans les parois du carter (30 et 31).

2. Mécanisme de direction à assistance hydraulique, en particulier pour véhicules automobiles, présentant les caractéristiques suivantes:
- un piston de travail (2) déplaçable sur une vis sans fin de direction (6) est logé dans un carter (1);
- il existe une soupape de braquage qui injecte de l'huile sous pression dans les chambres de travail (10 et 11) du piston de travail (2);
- dans un perçage axial (17) du piston de travail (2) sont placés, des deux côtés, des valves de coupure (20, 22, 24; 21, 23, 25) avec des poussoirs (24, 25) dépassant du piston de travail (2) pour couper la force auxiliaire dans les deux positions finales de braquage;
- l'actionnement des valves de coupure (20, 22, 24; 21, 23, 25) se fait en amenant les poussoirs en contact avec des butées pouvant être insérées dans les parois radiales du carter;
- lors du premier montage, les butées sont automatiquement enfoncées par le piston de travail (2) dans la position déterminante pour la coupure de la force auxiliaire,
**caractérisé** en ce que les butées sont conçues en tant que petits pistons (37) munis de surfaces de poussée (38) et que ces pistons sont placées dans des douilles (35) vissables.

3. Mécanisme de direction à assistance hydraulique selon la revendication 1 ou 2, **caractérisé** en ce que le siège des butées (douilles 32, 33; petits pistons 37) présente des tores (36 ou 37) afin d'améliorer l'adhérence.

4. Mécanisme de direction à assistance hydraulique selon la revendication 2, **caractérisé** en ce que chacun des petits pistons (37) présente un perçage de décharge (42).
